# EUROPÄISCHE PATENTANMELDUNG

(11) **EP 1 070 969 A2**
(43) Veröffentlichungstag der Anmeldung: **24.01.2001**
(21) Anmeldenummer: 00202556.7
(22) Anmeldetag: 17.07.2000
(51) Int. Cl.: G01T 1/00

(54) **Szintillationsstrahlungsdetektor**

(30) Priorität: 23.07.1999 DE 19934768
(71) Anmelder: Philips Corporate Intellectual Property GmbH, 52064 Aachen (DE); Koninklijke Philips Electronics N.V., 5621 BA Eindhoven (NL)
(72) Erfinder: Wieczorek, Herfried, Philips Corporate, 52064 Aachen (DE); Schneider, Stefan, Philips Corporate, 52064 Aachen (DE); Lauter, Josef, Philips Corporate, 52064 Aachen (DE)
(74) Vertreter: Volmer, Georg, Dipl.-Ing.

(57) **Zusammenfassung**

Die Erfindung betrifft einen Detektor zur Detektion elektromagnetischer Strahlung (6, 9) mit Szintillatoren (S₁-S₅), einer Fotosensorvorrichtung (F₁-F₅) und einer Zwischenschicht (10), bei dem das optische Übersprechen durch Mehrfachreflexion in der Zwischenschicht dadurch verhindert wird, dass wenigstens Teile der Zwischenschicht (10) elektromagnetische Strahlung (9) absorbierende Stoffe enthalten.

## Beschreibung

Die Erfindung bezieht sich auf einen Detektor zur Detektion elektromagnetischer Strahlung mir Szintillatoren, einer Fotosensorvorrichtung und einer Zwischenschicht. Derartige Detektoren werden zur Umwandlung von beispielsweise Röntgenstrahlung in Strahlung im sichtbaren Lichtbereich eingesetzt.

Detektoren beispielsweise für Computertomographie sind üblicherweise in Kombination einer Fotosensorvorrichtung und Szintillatoren aufgebaut, wobei die Fotosensorvorrichtung das vom Szintillator emittierte Licht detektiert.

In der JP 09043356 A wird ein Detektor beschrieben, bei dem ein Szintillator über einem Lichtdetektionspanel angeordnet ist. Zwischen dem Szintillator und dem Lichtdetektionspanel ist eine transparente Zwischenschicht angeordnet, die das aus Röntgenstrahlung umgewandelte Licht ungehindert passieren lässt. In dieser Anordnung wird durch in den Szintillator gesägte Schlitze, die rechtwinklig zur Zwischenschicht angeordnet und mit Klebstoff gefüllt sind, ein Übersprechen in benachbarte Kanäle durch Totalreflexion des Lichtes an den Schlitzen gedämpft, wobei als Kanal ein Szintillatorelement mit dem dazugehörigen Fotosensor bezeichnet wird. Das Übersprechen durch mehrfache Reflexion in der Zwischenschicht zwischen Fotosensoren und Szintillatorelementen kann so jedoch nicht verhindert werden.

Ein wesentlicher Faktor, der die Bildqualität der CT-Detektoren bestimmt, ist das Übersprechen zwischen benachbarten Kanälen. Das Übersprechen zwischen den benachbarten Kanälen entsteht beispielsweise durch Röntgenfluoreszenzquanten sowie durch optisches Übersprechen. Ein Detektor detektiert die elektromagnetische Strahlung in entsprechender Auflösung, die durch die Anzahl von Kanälen festgelegt wird. Die sichtbare Lichtstrahlung kann bei entsprechendem Einfallswinkel von einem Kanal in einen benachbarten Kanal reflektiert werden. Damit entstehen Verfälschungen des darzustellenden Röntgenbildes, da Strahlungsanteile eines Kanals in einem anderen Kanal detektiert werden und in der späteren Darstellung ein Abbildungswert entsteht, der nicht der Realität entspricht.

Das Übersprechen durch Röntgenfluoreszenzquanten lässt sich durch geeignete Röntgenabsorber zwischen den einzelnen Szintillatorelementen verhindern. Optisches Übersprechen entsteht dagegen durch das im Szintillator erzeugte Licht, das entweder direkt ins benachbarte Szintillatorelement transmittiert wird oder durch mehrfache Reflexion in der Zwischenschicht zwischen den Fotosensoren und den Szintillatorelementen zum benachbarten Fotosensor gelangt.

Nach dem heutigen Stand der Technik wird das optische Übersprechen dadurch verhindert, dass die Absorberbleche zwischen benachbarten Szintillatorelementen in Nuten eingesenkt werden, die zwischen den einzelnen Fotosensoren aus dem Siliziumchip herausgeätzt werden, so dass die Absorber auch die Zwischenschicht teilen. Dies ist jedoch nur bei relativ großen linearen Detektorstrukturen möglich.

Aufgabe der Erfindung ist es deshalb, eine Anordnung anzugeben, bei der das optische Übersprechen durch Mehrfachreflexion in der Zwischenschicht verhindert wird.

Diese Aufgabe wird dadurch gelöst, dass wenigstens Teile einer Zwischenschicht elektromagnetische Strahlung absorbierende Stoffe enthalten.

Ein Szintillator besteht aus mehreren Szintillatorelementen oder- kristallen. Die Fotosensorvorrichtung enthält wenigstens ein fotosensitives Element oder einen Fotosensor je Szintillatorelement. Die Fotosensorvorrichtung detektiert das von den Szintillatorelementen emittierte Licht.

Das Übersprechen durch Röntgenfluoreszenzquanten wird durch Einlegen von Molybdänblechen oder anderen geeigneten Metallen, z.B. Tantal oder Blei, als Absorber zwischen die Szintillatorelemente verhindert. Diese Absorber verhindern auch ein direktes optisches Übersprechen zwischen den einzelnen Szintillatorelementen, nicht jedoch ein indirektes Übersprechen in der Zwischenschicht.

Bei zweidimensionalen Detektoren ist die oben beschrieben Methode, bei der die Absorber durch geätzte Nuten im Siliziumchip auch die Zwischenschicht unterteilen, nicht anwendbar. Eine zweidimensionale exakte Metallgitterstruktur ist nicht realisierbar und außerdem ist es nicht möglich, auf kleinen 1 bis 2 mm² großen Pixeln in CMOS-Chips Gräben in die Siliziumchips zu ätzen, weil die Siliziumoberfläche für Fotosensoren und Auslesestrukturen zur Verfügung stehen muss.

Die auf die Szintillatorelemente auftreffende Röntgenstrahlung wird in sichtbare Lichtstrahlung umgewandelt und gelangt idealerweise durch eine zwischen den Szintillatorelementen und der Fotosensorvorrichtung angeordnete Zwischenschicht direkt in den unter dem jeweiligen Szintillatorelement angeordneten Fotosensor. Lichtquanten, die nicht in den unter dem Szintillatorelement angeordneten Fotosensor gelangen, die beispielsweise durch Mehrfachreflexion an den Übergangsschichten in einen Nachbarkanal transmittiert werden, verfälschen das darzustellende Röntgenbild. Der Weg, den diese zum Übersprechen beitragende Lichtanteile zurücklegen, ist erheblich länger als der Weg, den die direkte Lichtstrahlung in den darunterliegenden Fotosensor zurücklegt. Deshalb werden in die Zwischenschicht elektromagnetische Strahlung absorbierende Stoffe eingefügt, die die zum Übersprechen beitragenden Lichtanteile auf ihrem längeren Weg daran hindern, in den benachbarten Kanal zu transmittieren.

Der Detektor, der insbesondere als Röntgendetektor oder als CT-Detektor eingesetzt wird, weist eine Zwischenschicht auf, die vorzugsweise als Klebstoff realisiert ist. Als Szintillator werden mehrere durch Absorber unterteilte Szintillatorkristalle oder -elemente zusammengefügt. Diese Szintillatorelemenre werden mittels der Zwischenschicht mit der darunter angeordneten Fotosensorenschicht verbunden. Durch die Verwendung von Klebstoff lässt sich vorteilhafterweise eine zuverlässige Kopplung zwischen den Szintillatorelementen und den jeweils zugeordneten Fotosensoren herstellen, wodurch ein hohes Detektorsignal ermöglicht wird.

Als absorbierender Stoff kann vorzugsweise Ruß dem Klebstoff beigemischt werden. Der Rußanteil ist dabei so zu wählen, dass die Schwächung des Lichtes beim Passieren der Zwischenschicht auf dem direkten Weg zum Fotosensor relativ gering ist. Die Schwächung des Lichtes, das den längeren Weg zu einem benachbarten Fotosensor zurücklegt, ist jedoch erheblich größer.

Die Verteilung des absorbierenden Stoffes kann sich auf Teile der Zwischenschicht beschränken, wodurch jedoch die Herstellungskosten steigen. Vorzugsweise wird eine gleichmäßige Verteilung des absorbierenden Stoffes in der gesamten Zwischenschicht realisiert.

Die erfindungsgemäße Zwischenschicht, die elektromagnetische Strahlung absorbierende Stoffe enthält, reduziert die Herstellungskosten eines Detektors erheblich, da keine speziell strukturierten Siliziumchips und keine einzelnen Szintillatorelemente und Absorberbleche verwendet werden müssen, um einen Detektor mit entsprechend reduziertem Übersprechverhalten herzustellen. Diese einfache, kostengünstige Verfahrenstechnik erfordert keine aufwendige Maskentechnik, die sonst verwendet werden müsste, um strukturierte, schwarze Absorberschichten zwischen den einzelnen Szintiliatorelementen und in der Zwischenschicht aufzubringen.

Die Aufgabe wird außerdem durch einen elektromagnetische Strahlung absorbierende Stoffe enthaltenden Klebstoff zum Verbinden von Szintillatoren und einer Fotosensorvorrichtung eines Detektors zur Detektion von elektromagnetischer Strahlung gelöst.

Ein weiterer Gegenstand der Erfindung ist ein Computertomograph umfassend:
einen Röntgenstrahler zum Aussenden eines um eine Systemachse drehbaren Röntgenstrahlbündels, eine Recheneinheit zur Berechnung von Bildern eines untersuchten Objekts mittels der bei verschiedenen Projektionen gebildeten Detektorsignalen, sowie einen vom Röntgenstrahl getroffenen Detektor mit Szintillatoren, einer Fotosensorvorrichtung und einer Zwischenschicht, wobei wenigstens Teile der Zwischenschicht elektromagnetische Strahlung absorbierende Stoffe enthalten.

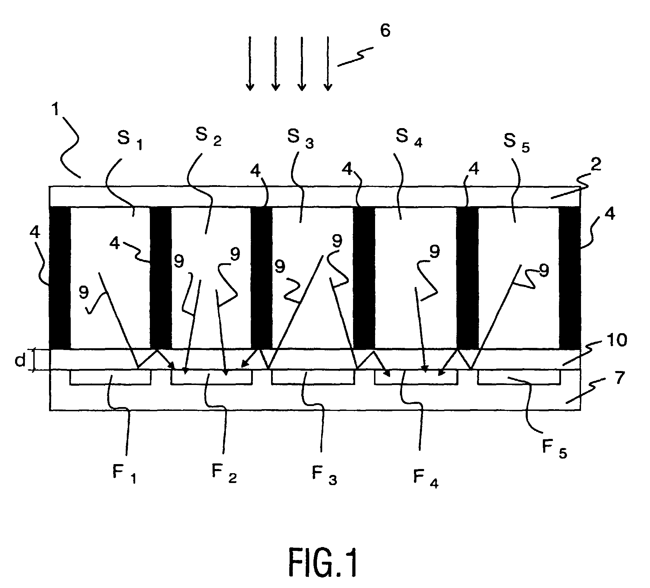

Nachfolgend wird anhand der Figur ein Ausführungsbeispiel näher erläutert. Die Figur zeigt den schematischen Aufbau eines Detektors.

In der Figur ist ein Detektor 1 zur Detektion elektromagnetischer Strahlung dargestellt. Dieser Detektor 1 besteht aus mehreren Szintillatorelementen S₁-S₅, die durch jeweils senkrecht zur Einfallrichtung der elektromagnetischen Strahlung stehende Absorber 4 getrennt sind. Über den Szintilatorelementen S₁-S₅ ist eine Reflektorschicht 2, z.B. bestehend aus einer TiO₂-Schicht in Lack, angeordnet, die für die eintreffende elektromagnetische Strahlung, beispielsweise Röntgenstrahlung 6, keine Behinderung darstellt. Diese Reflektorschicht 2 hindert Lichtquanten, welche bereits aus Röntgenstrahlung 6 umgewandelt wurde, am Austreten in diese Richtung. Die aus der Röntgenstrahlung 6 umgewandelten Lichtquanten 9 werden ebenfalls an den Absorbern 4 reflektiert, so dass sie letztendlich in eine darunterliegende Fotodiode F₁-F₅ geführt werden. Zwischen den Szintillatorelementen S₁-S₅ und den auf einem Silizium-Substrat 7 angeordneten Fotodioden F₁-F₅ ist die Zwischenschicht 10 angeordnet. Diese Zwischenschicht 10 enthält einen Rußanteil, der die auftreffende Lichtstrahlung 9 auf ihrem Weg von einem Szintillatorelement, beispielsweise S₁, zur benachbarten Fotodiode F₂ schwächt. Der Rußanteil wird dabei so gewählt, dass die optische Absorption für die Einkopplung der Photonen in die unter dem Szintillatorelement S₁ liegende Fotodiode F₁ ohne wesentlichen Absorptionsverlust erfolgt, während die Absorption auf dem wesentlich längeren Weg zur benachbarten Fotodiode F₂ ausreicht, um das optische Übersprechen stark zu reduzieren.

Als Fotosensoren können spezielle Fotodioden aus kristallinem Silizium verwendet werden, auf die einzelne Szintillatorelemente aufgeklebt sind. Die Szintillatorelemente sind vorzugsweise durch Cadmiumwolframat(CdWo₄) oder keramische Elemente auf Gadoliniumoxysulfid basierend, realisiert.

Fotodioden F₁-F₅ weisen beispielsweise eine Länge von 20 bis 30 mm und eine Breite von 1 mm auf und werden als Modul mit etwa 20 Dioden auf einem Siliziumchip hergestellt. Bei zweidimensionalen Detektoranordnungen bestehen derartige Module aus einer Vielzahl von Einzeldioden mit typischen Abmessungen von 1 bis 2 mm, die auf einem kristallinen Siliziumchip, z.B. einem CMOS-Chip hergestellt werden.

Die Zwischenschicht zwischen Szintillatorelementen S₁-S₅ und Fotodioden F₁-F₅ ist vorzugsweise 5 bis 10 µm dick (Dicke d) und die Absorber zwischen den Detektorekmenten haben eine Breite von 100 - 200 µm.

Wird ein Kleber mit einer optischen Absorptionslänge von 200µm für das von den Szintillatorelementen ausgehende Licht verwendet, so beträgt die Schwächung des Lichtes beim Durchgang durch die 10 µm Zwischenschicht vom Szintillator zur darunterliegenden Fotodiode etwa 5 %, unter Berücksichtigung des isotrop ausgesandten Lichtes ca. 10 %. Bei der Zwischenschichtdicke von 5 µm beträgt der Transmissionsverlust nur 2,5 bis 5 %. Dagegen werden die Lichtquanten, die durch Mehrfachreflexion in der Zwischenschicht auf einem optischen Weg von 150 bis 300 µm zur benachbarten Fotodiode gelangen, um 50 bis 78 % geschwächt. Insgesamt wird die Signalhöhe des von den Fotosensoren ausgeksenen Signals durch diese Maßnahme kaum reduziert, während das optische Übersprechen um den Faktor 2 bis 5 reduziert wird. Bei ein- und zweidimensionalen CT-Detektoren können Standard-CMOS-Chips für die Fotodioden sowie beliebige Anordnungen aus Szintillatorelementen mit zwischenliegenden Absorberlamellen verwendet werden, die mit dem absorbierende Stoffe enthaltenden Klebstoff verbunden werden, ohne die Bildqualität durch das beim üblichen Klebeverfahren, bei dem hochtransparenter Klebstoff, z.B. Epoxidharz, verwendet wird, auftretende hohe optische Übersprechen zu verringern.

Derartige Derektoren werden beispielsweise in Computertomographen angewendet. In diesen Computertomographen ist eine Röntgenröhre dem Detektor gegenüberliegend angeordnet. Das zu untersuchende Objekt wird auf einer Liege zwischen Röntgenröhre und Detektor eingebracht. Die Röntgenröhre und der Detektor sind dabei auf einem kreisförmigen Portalgestell angeordnet, die sich um das Objekt dreht und mehrere Projektionen des Objekts aufnimmt. Aus diesen mehreren Projektionen wird in einer Bildverarbeitungseinheit ein Bild berechnet. Die in dem Detektor angeordnete Zwischenschicht zum Verbinden des Szintillators mit der Fotosensorvorrichtung, enthält absorbierende Stoffe, die das optische Übersprechen in der Zwischenschicht reduzieren.

Eine derartige Zwischenschicht lässt sich auch vorteilhafterweise für großflächige flache Röntgendetektoren einsetzen.

## Patentansprüche

1. Detektor zur Detektion elektromagnetischer Strahlung (6, 9) mit Szintillatoren (S₁-S₅), einer Fotosensorvorrichtung (F₁-F₅) und einer Zwischenschicht (10)
dadurch gekennzeichnet,
dass wenigstens Teile der Zwischenschicht (10) elektromagnetische Strahlung (9) absorbierende Stoffe enthalten.

2. Detektor nach Anspruch 1,
dadurch gekennzeichnet,
dass die Zwischenschicht (10) als Klebstoff realisiert ist.

3. Detektor nach Anspruch 1 und 2,
dadurch gekennzeichnet,
dass der Klebstoff einen Rußanteil enthält, der die elektromagnetische Strahlung (9) beim Passieren der Zwischenschicht (10) um einen vom Rußanteil abhängigen Faktor bezüglich der Dicke d der Zwischenschicht (10) schwächt.

4. Detektor nach Anspruch 1 bis 3,
dadurch gekennzeichnet,
dass die Zwischenschicht (10) mit einer Dicke von 2 bis 20 µm ausgebildet ist und die elektromagnetische Strahlung (9) beim direkten Passieren der Zwischenschicht (10) um 5% bis 20% geschwächt wird.

5. Detektor nach Anspruch 1,
dadurch gekennzeichnet,
dass die Zwischenschicht (10) elektromagnetische Strahlung absorbierende Stoffe in gleichmäßiger Verteilung enthält.

6. Klebstoff zum Verbinden von Szintillatoren (S₁-S₅) und einer Fotosensorvorrichtung (F₁-F₅) eines Detektors (1) zur Detektion von elektromagnetischer Strahlung (6),
dadurch gekennzeichnet,
dass der Klebstoff elektromagnetische Strahlung (9) absorbierende Stoffe enthält.

7. Computertomograph umfassend:
einen Röntgenstrahler zum Aussenden eines um eine Systemachse drehbaren Röntgenstrahlbündels,
eine Recheneinheit zur Berechnung von Bildern eines untersuchten Objekts mittels der bei verschiedenen Projektionen gebildeten Detektorsignalen, sowie einen vom Röntgenstrahl getroffenen Detektor (1) mit Szintillatoren (S₁-S₅), einer Fotosensorvorrichtung (F₁-F₅) und einer Zwischenschicht(10),
dadurch gekennzeichnet,
dass wenigstens Teile der Zwischenschicht (10) elektromagnetische Strahlung (9) absorbierende Stoffe enthalten.
